## Europäisches Patentamt
## European Patent Office
## Office européen des brevets

(19)

(11) Veröffentlichungsnummer: **0 053 250**
**B1**

(12) # EUROPÄISCHE PATENTSCHRIFT

(45) Veröffentlichungstag der Patentschrift:
04.04.84

(21) Anmeldenummer: 81108205.6

(22) Anmeldetag: 12.10.81

(51) Int. Cl.³: **C 02 F 11/14**, B 01 D 37/00

(54) Verfahren zum Entwässern von Klärschlämmen auf Filterpressen.

(30) Priorität: 29.11.80 DE 3045150

(43) Veröffentlichungstag der Anmeldung:
09.06.82 Patentblatt 82/23

(45) Bekanntmachung des Hinweises auf die Patenterteilung:
04.04.84 Patentblatt 84/14

(84) Benannte Vertragsstaaten:
AT BE CH DE FR GB IT LI NL SE

(56) Entgegenhaltungen:
AT - B - 247 804
AT - B - 349 399
DE - A - 2 327 869
DE - A - 2 732 018
DE - A - 2 920 350

(73) Patentinhaber: BASF Aktiengesellschaft,
Carl-Bosch-Strasse 38, D-6700 Ludwigshafen (DE)

(72) Erfinder: Sander, Bruno, Dr., Moerikestrasse 10,
D-6700 Ludwigshafen (DE)
Erfinder: Lauer, Herbert, Dr., Pfalzring 59,
D-6704 Mutterstadt (DE)
Erfinder: Neuwirth, Manfred, Thorner Strasse 2B,
D-6800 Mannheim (DE)

## Verfahren zum Entwässern von Klärschlämmen auf Filterpressen

Die vorliegende Erfindung betrifft ein mehrstufiges Verfahren zum Entwässern von Klärschlämmer, die mit inerten Zuschlagstoffen, wie feinteiligen Kohlen oder Aschen oder deren Gemischen, homogen vermischt worden sind, denen organische Flockungsmittel zugegeben wurden, aus denen in einem ersten Entwässerungsschritt die Hauptmenge des Wassers durch Schwerkraftfiltration ohne Anlegen einer Druckdifferenz abgetrennt worden ist und die in einem zweiten Entwässerungsschritt durch Druckfiltration auf Filterpressen weitergehend entwässert worden sind zur Herstellung von Filterkuchen, die unter Wärmenutzung verbrannt werden können.

In Kläranlagen von Industrieunternehmen und in zentralen Großkläranlagen von Kommunen, in die größere Mengen gewerblicher Abwässer eingeleitet werden, wird es in zunehmendem Maße erforderlich, die anfallenden Klärschlämme durch Verbrennen zu beseitigen. Klärschlämme dieser Herkunft können Stoffe enthalten, die einer Unterbringung auf Deponien entgegenstehen. Eine umweltfreundliche und sichere Art der Beseitigung ist die totale Veraschung. Auch wegen stark gestiegener Transportkosten und wegen Raumnot auf den meisten Deponien wird eine Verbrennung der Klärschlämme angestrebt.

Eine wirtschaftliche Verbrennung ist nur durch eine möglichst hohe Aufkonzentrierung der Schlammfeststoffe erreichbar. Der spezifische Wassergehalt (kg Wasser/kg Schlammfeststoff) der zu verbrennenden Schlämme sollte möglichst gering sein.

Bei bekannten Verfahren werden die Schlämme auf Dekanter oder Siebbandpressen unter Verwendung organischer Flockungsmittel entwässert. In diesen Fällen muß zur weiteren Aufkonzentrierung der entwässerten Klärschlämme eine energiezehrende Trocknung nachgeschaltet werden, um eine wirtschaftliche Verbrennung durchführen zu können.

Auch bei dem verbreitetsten Entwässerungsverfahren, der einstufigen Entwässerung auf einer Kammerfilterpresse unter Verwendung von Eisensalzen und Kalk als Entwässerungshilfsmittel und unter Verwendung inerter Zuschlagstoffe, wie z. B. Asche, Sand, Steinmehl, werden Filterkuchen erzeugt, die als solche für eine Verbrennung nicht geeignet sind. Es müssen erhebliche Mengen Zusatzbrennstoffe wie Kohle und/oder Öl zugeschlagen werden. Außerdem stören die durch den Kalk hervorgerufenen Beläge und Verkrustungen an den Verbrennungseinrichtungen.

Nach einem anderen Entwässerungsverfahren (DE-A-2 920 350) ist eine weitergehende maschinelle Entwässerung von Klärschlämmen auf Kammerfilterpressen unter Verwendung organischer Flockungsmittel erreichbar. Die Klärschlämme werden unter definierten Bedingungen mit organischen Flockungsmitteln vorbehandelt, durch Schwerkraftfiltration von der Hauptmenge des Schlammwassers befreit und dann der Druckfiltration auf einer Kammerfilterpresse unterworfen. Durch die vorherige Aufkonzentrierung der Schlammfeststoffe bis in den Bereich von 10 bis 20% erlangen die Schlammflocken eine für das Verfahren ausreichende mechanische Stabilität. Die Klärschlämme können ohne Schädigung gefördert, gepumpt und bis zu einem Preßdruck von 15 bar der Druckfiltration unterworfen werden. Die erzielten Schlammfeststoffgehalte liegen bei Klärschlämmen, die einen organischen Anteil am Schlammfeststoff von weniger als 65% besitzen, so hoch, daß die Heizwerte der Filterkuchen im Bereich der selbstgängigen Verbrennung liegen. Bei Klärschlämmen mit einem höheren Anteil organischer Substanz am Schlammfeststoff ist ein geringer Zusatz von Kohleschlamm erforderlich, um selbstgängig verbrennbare Filterkuchen zu erhalten. Der Kohleschlamm wird den Klärschlämmen zugesetzt, bevor die organischen Flockungsmittel zugegeben werden. Bei diesem Verfahren ist es mitunter erforderlich, die Schichtdicken der Filterkammern zum Zwecke der Erzielung besonders hoher Schlammfeststoffgehalte zu vermindern.

Aus der Offenlegungsschrift DE-A-2 327 869 ist fernerhin eine Entwässerung in einer Kammerfilterpresse von mit einem organischen Flockungsmittel und Asche versetzten Schlamm bekannt. Als Ausgangsschlamm wird dabei ein eingedickter Frischschlamm mit einem Feststoffgehalt von 5 bis 10% verwendet. Der Zusatz eines inerten Zusatzstoffes nach der Flockungsmittelzugabe führt jedoch bei der beschriebenen einstufigen Entwässerung durch Filterpressen zu nicht voll befriedigenden Entwässerungsgraden. Bei Schlammfeststoffgehalten im Filterkuchen von 28% bis 36% betragen die spezifischen Wassergehalte 3,6 kg bis 5,0 kg Wasser je kg Schlammfeststoff und die Heizwerte nur 78 kcal/kg bis 251 kcal/kg. Eine Verbrennung ist daher nur möglich, wenn erhebliche Mengen Brennstoffe — Kohle oder Öl — zugegeben werden.

Aufgabe der Erfindung war es demnach, ein Entwässerungsverfahren zu erarbeiten, das die vorgenannten Nachteile nicht besitzt. Vor allem soll die Reduzierung der Schichtdicken der Filterkammern vermieden und eine Verbesserung sowie Erweiterung des Entwässerungsverfahrens gemäß der DE-A-2 920 350 angestrebt werden.

Eine weitere Aufgabe der Erfindung besteht darin, ein Entwässerungsverfahren zu erarbeiten, das Filterkuchen liefert, deren gesamter Wärmeinhalt bei einer Verbrennung in einem Kraftwerk anstelle von Primärenergieträgern in Strom und Dampf umgewandelt werden kann.

Diese Aufgaben wurden erfindungsgemäß dadurch gelöst, daß man die Zuschlagstoffe, wie feinteilige Kohlen oder Aschen oder deren Gemische, in einer Menge von 0,5 – 1,5 Gewichtsteilen je Gewichtsteil Schlammfeststoff zusetzt und die Klärschlämme bereits vor oder während dem

2

Einmischen der Zuschlagstoffe mit organischen Flockungsmitteln in einer Menge von 1 bis 7 kg organisches Flockungsmittel/t Schlammfeststoff versetzt.

Nach einer besonderen Ausbildung der Erfindung erfolgt die Behandlung der Klärschlämme mit den organischen Flockungsmitteln vor dem Einmischen der Zuschlagstoffe und zwar in der Weise, daß die Klärschlämme in einem Rührbehälter innerhalb von 1 bis 3 Minuten bei Rührerdrehzahlen von 5 bis 50 min⁻¹ mit der Flockungsmittellösung vermischt werden, oder, daß die Klärschlämme in statischen Rohrmischern, die in ihrem Innern Wendeln besitzen, in weniger als 1 Minute mit der Flockungsmittellösung in Kontakt gebracht werden.

Gemäß einer weiteren Ausbildung der Erfindung kann die Behandlung der Klärschlämme mit den organischen Flockungsmitteln gleichzeitig, mit dem Einmischen der Zuschlagstoffe in einem Mischer innerhalb von 1 bis 5 Minuten und bei Rührerdrehzahlen von 5 bis 50 min⁻¹ erfolgen.

Als organische Flockungsmittel für das erfindungsgemäße Verfahren werden Flockungsmittelmischungen eingesetzt, die aus einem Flockungsmittel mit 30 bis 40%iger kationischer Modifizierung und aus einem Flockungsmittel mit 70 bis 90%iger kationischer Modifizierung bestehen und deren Mischungsverhältnis 1 : 3 bis 3 : 1, bevorzugt 1 : 1 beträgt.

Unter Klärschlämmen sollen verstanden werden: Primärschlämme, die in der Vorklärstufe einer Klärstufe durch Sedimentation erhalten werden, Belebtschlämme (Überschußschlämme) aus biologischen Kläranlagen, Mischschlämme, die eine Abmischung von Belebtschlämmen mit Primärschlämmen darstellen, Faulschlämme, mineralisierte Schlämme, die z. B. durch Langzeitbelüftung bei Umgebungstemperatur entstehen. Die Schlämme können kommunaler, industrieller oder gemischter Herkunft sein.

Die Schlammfeststoffgehalte dieser Klärschlämme können innerhalb weiter Grenzen schwanken. Im allgemeinen werden jedoch Schlämme eingesetzt, die durch Schwerkraftsedimentation in Eindickern aufkonzentriert worden sind. Die Schlammfeststoffgehalte liegen dann z. B. bei Belebtschlämmen im Bereich von 2 bis 4 Gew.-%, bei Faulschlämmen im Bereich von 4 bis 10 Gew.-% und bei Primärschlämmen im Bereich von 5 bis 12 Gew.-%.

Als organische Flockungsmittel können handelsübliche Marken eingesetzt werden. Hierbei handelt es sich um wasserlösliche, makromolekulare Verbindungen, die durch Polymerisation oder durch Copolymerisation von Acrylamid, von Acrylsäure und/oder ihren Salzen oder von Estern der Acrylsäure bzw. Methacrylsäure, die über ihre Alkoholkomponente speziell modifiziert worden sind. Diese Flockungsmittel unterscheiden sich außerdem noch durch ihre unterschiedliche elektrische Ladung (kationisch, anionisch oder elektroneutral) und durch ihren Polymerisationsgrad.

Die Auswahl eines geeigneten Flockungsmittels nach Art und Menge erfolgt nach bekannten Methoden bereits im Labormaßstab.

Die Vorauswahl der organischen Flockungsmittel, die für die durchgreifende Verbesserung des Entwässerungsverhaltens der erfindungsgemäßen Schlammgemische eingesetzt werden sollen, erfolgte nach den Methoden, die in der DE-A-2 837 017 beschrieben worden sind.

Bei der Flockungsreaktion sollen möglichst Schlammflocken entstehen, die eine besondere hohe mechanische Stabilität besitzen.

Es wurde überraschend gefunden, daß Mischungen von organischen Flockungsmitteln, die aus einem Flockungsmittel mit 30 bis 40%iger kationischer Modifizierung und aus einem Flockungsmittel mit 70 bis 90%iger kationischer Modifizierung bestehen, besonders mechanisch stabile Schlammflocken liefern. Das Mischungsverhältnis kann im Bereich 1 : 3 bis 3 : 1 schwanken. Bevorzugt wird jedoch ein Mischungsverhältnis von 1 : 1.

Die erforderlichen Flockungsmittelmengen liegen im Bereich von 1 bis 7 kg Wirkstoff/t Schlammfeststoff. Sie sind abhängig von der Art des jeweiligen Schlamms und von der Feststoffkonzentration. Die Flockungsmittel werden in Form ihrer 0,05 – 0,2%igen wäßrigen Lösungen eingesetzt. Die Herstellung solcher verdünnter Flockungsmittellösungen aus den festen und flüssigen Handelsprodukten erfolgt nach den bekannten Methoden in handelsüblichen Vorrichtungen.

Die Flockungsmittellösungen werden direkt in die Schlammleitung nach der Schlammpumpe zudosiert. Hierbei können Eintragshilfen wie z. B. ein Kegelmischer oder ein statischer Mischer mit geringem Querschnitt vorteilhaft sein.

Bei dem erfindungsgemäßen Verfahren werden den durch Schwerkraftsedimentation eingedickten Klärschlämmen Zuschlagstoffe wie feinteilige Kohlen und Aschen zugefügt.

Als feinteilige Kohlen kommen in Betracht: Feinkohlen, die bei der Trennung von Feinkohle und Gangart (Berge) durch Flotation und nachfolgender Entwässerung gewonnen werden. Auch Kohleschlämme, die bei Naßaufbereitungsverfahren entstehen, sind geeignet. Ferner können Siebfraktionen von Kraftwerkskohlen oder von Grünkoks aus Raffinerien bis zu einer Korngröße von 1 mm verwendet werden.

Als weitere Zuschlagstoffe werden Aschen der verschiedensten Herkunft verwendet. Besonders wirtschaftlich ist die Verwendung von Aschen, die bei der Verwendung der Klärschlämme anfallen. Hierbei ist zubeachten, daß die Aschen möglichst kalkfrei sind und einen pH-Wert von 6 bis höchstens 8 besitzen. Eine Asche, deren pH-Wert größer als 8 beträgt, beeinflußt die nachfolgende Flockungsreaktion nachteilig.

Die Zusatzmengen der Zuschlagstoffe hängen von der jeweiligen Zielsetzung ab. Für den Fall, daß selbstgängig verbrennende Filterkuchen erzeugt werden sollen, liegen die Mengenverhältnisse von Schlammfeststoff (STS) : Kohlefeststoff (KTS) : Asche (A) im Bereich von 1 : 0,2 : 0,3 bis 1 : 0,5 : 1,0.

Werden Filterkuchen angestrebt, die als Brennstoff für Kraftwerke geeignet sind, d. h. wenn die Filterkuchen einen besonders hohen Heizwert haben sollen und die spezifischen Wassergehalte ein Minimum aufweisen sollen, dann wird auf einen Aschezusatz verzichtet und nur feinteilige Kohle zugeschlagen. Als besonders günstig erwiesen sich Mischungsverhältnisse im Bereich von STS : KTS = 1 : 1 bis 1 : 1,5.

Die Zuschläge werden in den Klärschlämmen mit Hilfe von Mischwerken homogen verteilt. Diese können absatzweise oder kontinuierlich betrieben werden. Die Verweilzeit in den Mischern beträgt 1 bis 5 Minuten. Die Rührerdrehzahlen liegen im Bereich von 5 bis 50 min$^{-1}$.

Die Behandlung der Klärschlämme mit den organischen Flockungsmitteln kann wegen der besonders hohen mechanischen Stabilität der Schlammflocken, die bei Anwendung der erfindungsgemäßen Flockungsmittelgemische erzielt wird, bereits vor dem Einmischen des Zuschlagstoffes vorgenommen werden. Es wurde überraschend gefunden, daß bei dieser Verfahrensweise die Schlammgemische ihre höchste Entwässerbarkeit bei Druckfiltration auf der Filterpresse erlangen.

Die Vorbehandlung der eingedickten Klärschlämme mit den wäßrigen 0,05 – 0,2%igen Flockungsmittellösungen kann in einem vertikal von unten nach oben durchströmten Rührbehälter (dynamischer Flockungsreaktor) innerhalb von 1 – 3 Minuten bei Rührerdrehzahlen von 5 – 50 min$^{-1}$ erfolgen. Die Flockungsreifezeiten und der günstigste Energieeintrag kann nach der in der DE-A-2 920 434 beschriebenen Methode ermittelt werden.

Diese Vorbehandlung kann ebenso erfolgreich in statischen Rohrmischern, die in ihrem Innern Wendeln besitzen, durchgeführt werden. Die Flockungsreifezeiten betragen in diesem Falle wegen der besonderen hydraulischen Verhältnisse weniger als 1 Minute. In der Regel werden mehrere Mischerelemente hintereinander geschaltet. Diese Mischstrecke (statischer Flockungsreaktor) ist dann Bestandteil der Schlammleitung.

Nach einer anderen Ausführungsform kann die Behandlung der Klärschlämme mit weiteren Mengen organischer Flockungsmittel gleichzeitig mit dem Einmischen der Zuschlagstoffe in einem Mischwerk innerhalb von 1 – 5 Minuten und bei Rührerdrehzahlen von 5 – 50 min$^{-1}$ erfolgen. In diesem Falle dient der Mischer ebenfalls als Flockungsreaktor. Die für die Flockung erforderliche Flockungsreifezeit und der notwendige Energieeintrag können bei dieser Arbeitsweise erreicht werden. Durch diese Art der Vorbehandlung werden bei einigen Schlammischungen ebenso günstige Entwässerungseffekte erzielt wie bei der vorher beschriebenen Arbeitsweise.

Nach der beschriebenen Schlammvorbehandlung werden die geflockten Schlammgemische, welche die Zuschlagstoffe enthalten, der ersten Entwässerungsvorrichtung zugeleitet und der Schwerkraftfiltration unterworfen. Als besonders geeignete Apparate erwiesen sich kontinuierlich arbeitende, zylinderförmige Siebtrommeln. Im Innern dieser Siebtrommeln befindet sich ein zylinderförmiger Käfig, auf dessen Umfangsfläche das Filtergewebe aufgezogen wurde. Die Filtergewebe können aus Metalldraht oder aus Synthesefasern wie z. B. Polypropylen- oder Polyesterfasern bestehen. Die Siebtrommeln können in ihrem Innern außerdem noch oberflächenerneuernde Einbauten besitzen, so daß der Schlamm beim Durchlauf intensiv gewendet wird. Solche Einbauten sind Leitbleche, Wehre oder Hohlwendeln. Die Verweilzeit des zu entwässernden Klärschlamms in der Siebtrommel wird außer durch die Länge des Apparates und den Durchsatz noch durch den Füllgrad bestimmt. Die Siebtrommeln arbeiten bei Drehzahlen von 1 bis 20 U/min. Die Verweilzeiten in dieser Entwässerungsstufe betragen 1 bis 10 Minuten und insbesondere 2 bis 5 Minuten.

Nach dieser Schwerkraftfiltration werden Schlammfeststoffgehalte von 12 bis 24 Gew.% erzielt und es werden bereits 50 bis 80% des Wassers abgetrennt.

Die vorentwässerten Schlammgemische werden in einem Zwischenbehälter, der als Mengenpuffer dient, gesammelt und von hier aus in die Filterpressen gefördert.

Als Filterpressen kommen Kammerfilterpressen, Rahmenfilterpressen oder Membranfilterpressen in Betracht. Bei Verwendung von Zuschlagstoffen in einer Menge von 0,5 – 1,5 Gewichtsteilen je Gewichtsteil Schlammfeststoff kann auch in größeren Schichtdicken bis zu 40 mm gepreßt werden. Dies ist ein Vorteil des erfindungsgemäßen Verfahrens, da jetzt auch bei Verwendung organischer Flockungsmittel als Entwässerungshilfsmittel anstelle von Eisensalzen und Kalk in größeren Schichtdicken gearbeitet werden kann.

Die Preßzeiten liegen mit 60 bis 90 Minuten günstiger als bei einer einstufigen Entwässerung auf Filterpressen. Infolge der Vorentwässerung durch Schwerkraftfiltration wird demnach Filterpressen-Kapazität eingespart. Es werden Preßdrücke bis 15 bar angewandt. Bei Einhaltung der erfindungsgemäßen Maßnahme lösen sich die Preßkuchen einwandfrei von den Filtertüchern ab, so daß ein selbsttätiger Abwurf erfolgen kann.

Die erzielten Feststoffgehalte in den Preßkuchen lagen überraschend hoch:
Bei der Verfahrensweise, bei der den Klärschlämmen feinteilige Kohlen in den Mengenverhältnissen von STS : KTS = 1 : 1 – 1 : 1,5 zugeschlagen werden, können Feststoffgehalte in den Preßkuchen von 55 – 65% erreicht werden. Die spezifischen Wassergehalte der Preßkuchen liegen im Bereich von

4

1,3 – 1,6 kg Wasser/kg Schlammfeststoff. Die Heizwerte betragen 9200 – 14 600 kJ/kg (2200 – 3500 kcal/kg). Aufgrund der hohen Heizwerte und der niedrigen spezifischen Wassergehalte sind diese Preßkuchen als Brennstoff für Kraftwerke geeignet.

Die besonderen Vorteile dieser Verfahrensvariante bestehen darin, daß einerseits die feinteilige Kohle, die zunächst als Filterhilfsmittel diente, in vollem Umfang als Primärenergieträger eingesetzt werden kann. Andererseits kann auch der gesamte Wärmeinhalt der Klärschlämme aus dem organischen Anteil des Schlammfeststoffes (oTS) zur Gewinnung von Strom und Dampf ausgenutzt werden. Diese Verfahrensvariante ist von besonderer Bedeutung für kommunale Großkläranlagen, da kommunale Klärschlämme besonders energiereich sind und günstige Voraussetzungen für die Verbrennung liefern.

Bei der Verfahrensvariante, bei der den Klärschlämmen feinteilige Kohlen und Aschen in den Mengenverhältnissen von $STS : KTS : A = 1 : 0,2 : 0,3 - 1 : 0,5 : 1,0$ zugeschlagen werden, können Feststoffgehalte in den Preßkuchen von 50 – 65% erhalten werden. Die spezifischen Wassergehalte der Preßkuchen liegen im Bereich von 1,2 bis 1,8 kg Wasser/kg Schlammfeststoff. Die Heizwerte betragen 4600 – 6300 kJ/kg (1100 – 1500 kcal/kg). Diese Preßkuchen können selbstgängig in Wirbel- oder Etagenöfen verbrannt werden.

Diese Verfahrensvariante gestattet eine kostengünstige Beseitigung der Klärschlämme bei minimalem Energieeinsatz, wenn eine Verbrennung in einem Kraftwerk unter Energiegewinnung nicht möglich ist.

Der Vorteil dieser Variante des erfindungsgemäßen Verfahrens gegenüber den Verfahren nach dem Stande der Technik besteht darin, daß durch die weitergehende mechanische Entwässerung unmittelbar selbstgängig verbrennbare Filterkuchen erzeugt werden. Eine energieaufwendige Trocknung der entwässerten Klärschlämme oder ein Zusatz von größeren Mengen feinteiliger Kohle und/oder Heizöl ist daher nicht mehr erforderlich.

Durch das erfindungsgemäße Verfahren wird demnach ein nutzbarer Primärenergieträger aus den Klärschlämmen gewonnen oder Primärenergie bei der Beseitigung der Schlämme eingespart. Bei der Verbrennung in Wirbelöfen wird eine höhere Betriebssicherheit durch die kalkfreie Fahrweise erreicht. In Folge der hohen Volumenreduzierung ist eine bessere Kapazitätsausnutzung bei den Entwässerungs- und Verbrennungsvorrichtungen möglich.

Die Erfindung wird nachfolgend an Hand von Beispielen näher erläutert. Die dort angegebenen Prozentzahlen sind immer Gewichtsprozente.

Bei den Beispielen 1 – 4 wurde ein Mischschlamm aus einer mechanisch biologischen Kläranlage verwendet, der aus 80 Teilen Belebtschlamm und aus 20 Teilen Primärschlamm besteht und dessen organischer Anteil am Schlammfeststoff 65% beträgt. Der Mischschlamm wurde in einem Rundeindicker durch Schwerkraftsedimentation aufkonzentriert.

Der Feststoffgehalt des eingedickten Mischschlamms betrug 4,5%.

## Beispiel 1

### Flockung

In dem oben charakterisierten Mischschlamm wurde mit Hilfe eines Kegelmischers, der in die Schlammleitung eingebaut wurde, eine 0,2%ige wäßrige Lösung eines Flockungsmittel-Gemisches, das aus gleichen Teilen eines organischen Flockungsmittels mit 40%iger kationischer Modifizierung und eines organischen Flockungsmittels mit 90%iger kationischer Modifizierung besteht, verteilt. Die gesamte Zugabemenge an organischen Flockungsmitteln betrug 6,4 kg Wirkstoff/t Schlammfeststoff.

Der das Flockungsmittelgemisch enthaltende Mischschlamm wurde dann 2 Minuten lang in einem vertikal durchströmten zylindrischen Behälter unter Rühren behandelt. Die Rührerdrehzahl des verwendeten Schneckenrührers betrug 20 min$^{-1}$.

### Konditionierung

Danach wurde dem geflockten Schlamm in einem Doppelwellenmischer innerhalb von 3 Minuten und bei einer Rührerdrehzahl von 20 min$^{-1}$ eine 50%ige wäßrige Suspension von Kohleschlamm und Klärschlammasche zugegeben, und zwar in der Menge, daß das Verhältnis von $STS : KTS : A$ wie $1 : 0,3 : 0,6$ beträgt. Der Heizwert des Trockenstoffgehaltes des eingesetzten Kohlenschlamms betrug $H_U$: 23 000 kJ/kg (5500 kcal/kg). Der gesamte Feststoffgehalt dieses Schlammgemisches Betrug 7,1%.

### Schwerkraftfiltration

Der geflockte und konditionierte Schlamm wurde in einer horizontalen Siebtrommel, die sich mit einer Drehzahl von 8 min$^{-1}$ drehte, innerhalb von 3,5 Minuten bis auf einen Feststoffgehalt von 19,2%

durch Schwerkraftfiltration vorentwässert.

## Druckfiltration

Der vorentwässerte Schlamm wurde in einem Sammelbehälter eingetragen und von dort mit Hilfe von Kolbenmembranpumpen in eine Kammerfilterpresse gefördert, deren Plattenabstand 33 mm betrug. Die Druckfiltration erfolgt bis zu einem Enddruck von 15 bar. Die Preßzeit betrug 90 min. Die Preßkuchen lösen sich selbsttätig von den Filtertüchern ab.

Daten der Preßkuchen

| | |
|---|---|
| Feststoffgehalt: | 60,3% |
| spez. Wassergehalt: | 1,25 kg Wasser/kg STS |
| Heizwert $H_U$: | 5856 kJ/kg (1401 kcal/kg) |

Die Preßkuchen konnten in einem Wirbelofen selbstgängig gebrannt werden.

## Beispiel 2

Es wurde wie in Beispiel 1 angegeben verfahren, jedoch erfolgte der Zusatz der 0,2%igen wäßrigen Flockungsmittellösung gleichzeitig mit dem Einmischen der Zuschlagstoffe in dem Doppelwellenmischer unter denselben Bedingungen.

Nach der Schwerkraftfiltration auf der Siebtrommel betrug der Festgehalt 18,9%.

Die Preßkuchen konnten nach der Druckfiltration auf der Kammerfilterpresse selbsttätig abgeworfen werden.

Daten der Preßkuchen

| | |
|---|---|
| Feststoffgehalt: | 59,1% |
| spez. Wassergehalt: | 1,32 kg Wasser/kg STS |
| Heizwert $H_U$: | 5693 kJ/kg (1362 kcal/kg) |

Die Preßkuchen konnten in einem Wirbelofen ohne Zusatzbrennstoff verbrannt werden. Dieses Beispiel zeigt, daß auch bei der vereinfachten Verfahrensweise bei Flockung und Konditionierung die Aufgabe gemäß Erfindung erreicht werden kann.

## Beispiel 3

## Flockung

In dem Mischschlamm wurde mit Hilfe eines Kegelmischers eine 0,1%ige wäßrige Lösung eines Flockungsmittelgemisches, das aus einem Teil eines organischen Flockungsmittels mit 40%iger kationischer Modifizierung und aus 2 Teilen eines organischen Flockungsmittels mit 90%iger kationischer Modifizierung besteht, verteilt. Die gesamte Zugabemenge an organischen Flockungsmitteln betrug 5,5 kg Wirkstoff/t STS. Danach durchströmte der das Flockungsgemisch enthaltende Schlamm eine Mischstrecke, die aus mehreren hintereinandergeschalteten statischen Rohrmischern (Fabrikat Kenics) bestand. Die Verweilzeit in dieser Mischstrecke betrug 30 Sekunden.

## Konditionierung

Der geflockte Schlamm wurde dann in einem Doppelwellenmischer innerhalb von 3 Minuten und bei einer Rührerdrehzahl von 25 min$^{-1}$ mit feinteiliger Kohle versetzt. Das Mengenverhältnis von STS : KTS betrug 1 : 1,3. Die feinteilige Kohle war ein Flotationskonzentrat mit einem Heizwert von $H_U$: 31 000 kJ/kg (7400 kcal/kg).

Der gesamte Feststoffgehalt dieses Schlammgemisches betrug 7,9%.

## Schwerkraftfiltration

Der vorbehandelte Schlamm wurde in einer horizontalen Siebtrommel, die sich mit einer Drehzahl von 10 min$^{-1}$ drehte, innerhalb von 3 Minuten bis auf einen Feststoffgehalt von 22,5% durch Schwerkraftfiltration vorentwässert.

## Druckfiltration

Die Druckfiltration erfolgte wie in Beispiel 1 beschrieben. Die Preßzeit betrug 70 min. Die Preßkuchen waren trocken und lösten sich einwandfrei von den Filtertüchern ab.

Daten der Preßkuchen

| | |
|---|---|
| Feststoffgehalt: | 62,5% |
| spez. Wassergehalt: | 1,38 kg Wasser/kg STS |
| Heizwert $H_U$: | 13 982 kJ/kg (3345 kcal/kg) |

Der Heizwert liegt im Bereich einer guten Braunkohle ($H_U$: 2500−3500 kcal/kg). Die Preßkuchen konnten in einem Kraftwerkskessel unter Gewinnung von Sekundärenergie (Strom und Dampf) verfeuert werden.

## Beispiel 4

Es wurde wie in Beispiel 3 angegeben verfahren, jedoch erfolgte der Zusatz der 0,1%igen wäßrigen Flockungsmittellösung gleichzeitig mit dem Einmischen der feinteiligen Kohle in dem Doppelwellenmischer unter denselben Bedingungen.

Der Feststoffgehalt nach der Vorentwässerung auf der Siebtrommel betrug 18,8%.

Nach der Druckfiltration auf der Kammerfilterpresse konnten die Preßkuchen selbsttätig abgeworfen werden.

Daten der Preßkuchen

| | |
|---|---|
| Feststoffgehalt: | 61,2% |
| spez. Wassergehalt: | 1,46 kg Wasser/kg STS |
| Heizwert: | 13 644 kJ/kg (3264 kcal/kg) |

Auch diese Preßkuchen konnten in einem Kraftwerk verfeuert werden.

## Beispiel 5

In diesem Beispiel wurde ein Primärschlamm verwendet, der in der Vorklärstufe einer Kläranlage abgetrennt worden ist. Er wurde in einem Rundeindicker durch Schwerkraftsedimentation innerhalb von 24 Stunden bis auf 6,5% Feststoffgehalt aufkonzentriert. Der organische Anteil am Schlammfeststoff (oTS) betrug: 51,5%. Der Heizwert des Schlammfeststoffgehaltes dieses Primärschlamms betrug $H_U$: 12 960 kJ/kg (3100 kcal/kg).

## Flockung

In dem Primärschlamm wurde mit Hilfe eines Kegelmischers eine 0,1%ige wäßrige Lösung eines Flockungsmittelgemisches, das aus 2 Teilen eines organischen Flockungsmittels mit 30%iger kationischer Modifizierung und aus 1 Teil eines organischen Flockungsmittels mit 90%iger kationischer Modifizierung besteht, verteilt. Die gesamte Zugabemenge an organischen Flockungsmitteln betrug 2,5 kg Wirkstoff/t STS.

Der das Flockungsmittelgemisch enthaltende Schlamm wurde dann 2 Minuten lang in einem vertikal durchströmten zylindrischen Behälter unter Rühren behandelt. Die Rührerdrehzahl des Schneckenrührers betrug 30 min⁻¹.

## Konditionierung

Danach wurde dem geflockten Schlamm in einem Doppelwellenmischer innerhalb von 4 Minuten und bei einer Rührerdrehzahl von 25 min⁻¹ feinteilige Kohle (Flotationskonzentrat), die bereits im Beispiel 3 verwendet wurde, zugegeben. Die Zugabemenge wurde so gewählt, daß das Mengenverhältnis von STS : KTS = 1 : 1,5 betrug.

Der gesamte Feststoffgehalt des Schlammgemisches betrug 12,9%.

### Schwerkraftfiltration

Der vorbehandelte Schlamm wurde in einer horizontalen Siebtrommel, die sich mit einer Drehzahl von 10 min⁻¹ drehte, innerhalb von 3 Minuten bis auf einen Feststoffgehalt von 20,8% durch Schwerkraftfiltration vorentwässert.

### Druckfiltration

Die Druckfiltration erfolgte wie in Beispiel 1 beschrieben. Nach einer Preßzeit von 75 Minuten konnten die Preßkuchen selbsttätig abgeworfen werden.

Daten der Preßkuchen

| | |
|---|---|
| Feststoffgehalt: | 63,0% |
| spez. Wassergehalt: | 1,47 kg Wasser/kg STS |
| Heizwert $H_U$: | 14 053 kJ/kg (3362 kcal/kg) |

Die Preßkuchen sind als Heizmaterial für ein Kraftwerk geeignet.

Zur Ermittlung des günstigsten Zugabeortes der organischen Flockungsmittel für die erfindungsgemäße Entwässerung im Laborversuch wurden an fünf aufeinanderfolgenden Tagen Mischschlamm-Proben untersucht, die nach Herkunft, Zusammensetzung und Eindickbedingungen dem Mischschlamm, der in den Beispielen 1 bis 4 verwendet wurde, entsprach. Der Feststoffgehalt der eingedickten Mischschlamm-Proben lag im Bereich von 4,2—4,8% und der organische Anteil an Schlammfeststoff lag im Bereich von 64,8—66,7%.

Die Schlammvorbehandlung erfolgte jeweils nach 3 Methoden:

### Methode A

500 ml Mischschlamm werden in ein 1 l-Becherglas (hohe Form) gegeben. Dann wird unter Rühren bei 50 min⁻¹ mit einem Blattrührer eine 0,2%ige wäßrige Flockungsmittellösung innerhalb von 10 Sekunden zugegeben. Der geflockte Schlamm wird noch 120 Sekunden lang bei der angegebenen Rührerdrehzahl behandelt.

Anschließend wird die Rührerdrehzahl auf 200 min⁻¹ erhöht und es werden die jeweiligen Zuschlagstoffe (feinteilige Kohlen, Aschen) in den angegebenen Mengen innerhalb von 30 Sekunden zugegeben. Die gesamte Mischzeit beträgt 3 Minuten.

### Methode B

500 ml Mischschlamm werden in ein 1 l-Becherglas gegeben. Dann werden unter Rühren bei einer Rührerdrehzahl von 200 min⁻¹ gleichzeitig Zuschlagstoffe und Flockungsmittellösung innerhalb von 30 Sekunden zugegeben. Die gesamte Mischzeit beträgt 3 Minuten.

### Methode C

500 ml Mischschlamm werden in ein 1 l-Becherglas gegeben. Unter Rühren bei einer Rührerdrehzahl von 200 min⁻¹ werden nacheinander die Zuschlagstoffe innerhalb von 30 Sekunden zugegeben. Die gesamte Mischzeit beträgt 3 Minuten.

Danach wird die Rührerdrehzahl auf 50 min⁻¹ zurückgenommen und es wird die Flockungsmittellösung innerhalb von 10 Sekunden hinzugefügt. Das geflockte Schlammgemisch wird noch 120 Sekunden bei der angegebenen Rührerdrehzahl behandelt.

Die Rührerdrehzahlen wurden beim Untermischen der Zuschlagstoffe gegenüber den Praxisversuchen in den Beispielen 1 bis 4 erhöht, damit ein vergleichbarer Energieeintrag erfolgt.

Die Schlammproben, die nach den Methoden A, B und C vorbehandelt worden sind, wurden in einem 1. Entwässerungsschritt der Schwerkraftfiltration innerhalb von 30 Minuten und in einem 2. Entwässerungsschritt der Druckfiltration auf einer Laborpresse unterworfen. Es wurde 1 Minute lang bei wachsendem Druck und 2 Minuten bei einem konstanten Druck von 10 bar entwässert.

### Vergleichsbeispiel 1

Bei diesen Versuchen wurde den Mischschlammproben feinteilige Kohle (ein Kohleschlamm in Form einer 50%igen wäßrigen Suspension) und Klärschlammasche zugegeben. Das Mengenverhältnis von STS : KTS : A betrug in allen Fällen 1 : 0,3 : 0,6.

Als Flockungsmittellösung wurde eine 0,2%ige wäßrige Lösung eines Flockungsmittelgemisches, das aus gleichen Teilen eines organischen Flockungsmittels mit 40%iger kationischer Modifizierung und eines organischen Flockungsmittels mit 90%iger kationischer Modifizierung besteht, verwendet. Die gesamte Zugabemenge an organischen Flockungsmitteln betrug 6,0 g Wirkstoff/kg STS.

Folgende Entwässerungsgrade (Feststoffgehalt der Filterkuchen) wurden nach Schwerkraftfiltration und nach Druckfiltration ermittelt:

|  | Schwerkraft-filtration | | Druck-filtration | |
|---|---|---|---|---|
|  | $\bar{x}$ | s | $\bar{x}$ | s |
| Methode A | 16,7% | 0,9 | 57,6% | 0,8 |
| Methode B | 16,7% | 0,9 | 57,1% | 1,4 |
| Methode C | 15,8% | 1,2 | 54,2% | 2,5 |

($\bar{x}$ = Mittelwert, s = Standardabweichung)

Vergleichsbeispiel 2

Bei dieser Versuchsreihe wurde dem Mischschlamm als Zuschlagstoff ein Flotationskonzentrat zugegeben. Das Mengenverhältnis von STS : KTS betrug 1 : 1,3.

Als Flockungsmittellösung wurde eine 0,2%ige wäßrige Lösung eines Flockungsmittelgemisches, das aus einem Teil eines organischen Flockungsmittels mit 40%iger kationischer Modifizierung und aus 2 Teilen eines organischen Flockungsmittels mit 90%iger kationischer Modifizierung besteht, verwendet. Die gesamte Zugabemenge an organischen Flockungsmitteln betrug 5,5 g Wirkstoff/kg STS.

Es wurden folgende Feststoffgehalte der Filterkuchen nach Schwerkraftfiltration und nach Druckfiltration ermittelt:

|  | Schwerkraft-filtration | | Druck-filtration | |
|---|---|---|---|---|
|  | $\bar{x}$ | s | $\bar{x}$ | s |
| Methode A | 17,8% | 0,5 | 60,3% | 1,4 |
| Methode B | 17,6% | 0,6 | 59,5% | 2,1 |
| Methode C | 16,2% | 1,3 | 58,1% | 2,6 |

($\bar{x}$ = Mittelwert, s = Standardabweichung)

Die Vergleichsbeispiele 1 und 2 zeigen, daß bei der erfindungsgemäßen Zugabe der Flockungsmittel vor oder während des Einmischens der Zuschlagstoffe die günstigsten Entwässerungseffekte mit den geringeren Schwankungsbreiten erzielt werden.

Beispiele 6 und 7
(Verwendung von Grünkoks und Kraftswerkskohle)

Es wurde ein Mischschlamm verwendet, der auch in den Vergleichsbeispielen 1 und 2 eingesetzt wurde. Der Feststoffgehalt des eingedickten Schlamms betrug 4,6%, der organische Anteil an Schlammfeststoff 65,0%.

Die Schlammvorbehandlung mit den organischen Flockungsmitteln und den Zuschlagstoffen erfolgte nach Methode A. Die Schwerkraftfiltration und die Druckfiltration wurde, wie bei den Vergleichsversuchen 1 und 2 angegeben, durchgeführt.

Als Flockungsmittellösung wurde eine 0,2%ige wäßrige Lösung eines Flockungsmittelgemisches eingesetzt, das aus gleichen Teilen eines organischen Flockungsmittels mit 40%iger kationischer Modifizierung und eines organischen Flockungsmittels mit 90%iger kationischer Modifizierung besteht, verwendet. Die gesamte Zugabemenge an organischen Flockungsmitteln betrug 5,5 g Wirkstoff/kg STS.

Als Zuschlagstoffe wurden Siebfraktionen mit Korngrößen kleiner als 1 mm von Grünkoks aus einer Raffinerie (Beispiel 6) und von einer Kraftwerkskohle (Beispiel 7) verwendet. Das Mengenverhältnis von STS : KTS betrug 1 : 1,3.

Die Heizwerte des Trockenstoffs der feinteiligen Kohlen betragen:

Grünkoks: $H_U$: 35 100 kJ/kg (8400 kcal/kg)
Kraftwerkskohle: $H_U$: 29 700 kJ/kg (7100 kcal/kg)

Daten der Filterkuchen

|  | Beispiel 6 | Beispiel 7 |
|---|---|---|
|  | (Grünkoks) | (Kraft-werks-kohle) |
| **Feststoffgehalte (%)** |  |  |
| nach Schwerkraft-filtration | 17,2 | 16,8 |
| nach Druckfiltration | 62,8 | 60,5 |
| Spez. Wassergehalte (kg Wasser/kg STS) | 1,36 | 1,50 |
| **Heizwerte $H_U$:** |  |  |
| (kJ/kg) | 15 550 | 13 033 |
| (kcal/kg) | 3 720 | 3 118 |

Die Beispiele 6 und 7 zeigen, daß Grünkoks und Kraftwerkskohle ebenso als feinteilige Kohlen bei dem erfindungsgemäßen Verfahren eingesetzt werden können.

Vergleichsbeispiel 3

Bei der Durchführung des Beispiels 1 wurde dem geflockten, konditionierten und vorentwässerten Schlamm, der aus einem Sammelbehälter mit Hilfe einer Kolbenmembranpumpe in eine Kammerfilterpresse gefördert wurde, vor und nach der Pumpe eine Probe entnommen. Die Probeentnahmen erfolgten, als der Preßdruck 15 bar erreicht hatte.

Die Proben wurden im Labor der Druckfiltration auf einer Laborpresse unterworfen. Es wurde 1 Minute lang bei wachsendem Druck und 2 Minuten bei einem konstanten Druck von 10 bar entwässert.

Zum Vergleich wurde ein nicht erfindungsgemäßes Flockungsgemisch eingesetzt, das aus einem Teil eines organischen Flockungsmittels mit 70%iger kationischer Modifizierung und aus 2 Teilen eines organischen Flockungsmittels mit 90%iger kationischer Modifizierung bestand. Sonst wurde wie in Beispiel 1 beschrieben verfahren.

Die Probenahme und die Überprüfung auf der Laborpresse erfolgte unter vergleichbaren Bedingungen wie oben ausgeführt.

Feststoffgehalt der Preßkuchen (Laborpresse)

| | Ort der Probenahme: | |
| --- | --- | --- |
| | vor Pumpe | nach Pumpe |
| Beispiel 1 | 57,3% | 56,9% |
| (mit einem erfindungsgemäßen Flockungsmittelgemisch) | | |
| Vergleichsbeispiel 3 | 54,0% | 48,9% |
| (mit einem nicht erfindungsgemäßen Flockungsmittelgemisch) | | |

Dieses Vergleichsbeispiel zeigt die hohe mechanische Belastbarkeit der Schlammflocken, die bei Verwendung des erfindungsgemäßen Flockungsmittelgemisches und bei Anwendung der erfindungsgemäßen Verfahrensweise entstehen.

## Patentansprüche

1. Mehrstufiges Verfahren zum Entwässern von Klärschlämmen, die mit inerten Zuschlagstoffen, wie feinteiligen Kohlen oder Aschen oder deren Gemischen, homogen vermischt worden sind, denen organische Flockungsmittel zugegeben wurden, aus denen in einem ersten Entwässerungsschritt die Hauptmenge des Wassers durch Schwerkraftfiltration ohne Anlegen einer Druckdifferenz abgetrennt worden ist und die in einem zweiten Entwässerungsschritt durch Druckfiltration auf Filterpressen weitergehend entwässert werden zur Herstellung von Filterkuchen, die unter Wärmenutzung verbrannt werden können, dadurch gekennzeichnet, daß man die Zuschlagstoffe, wie feinteilige Kohlen oder Aschen oder deren Gemische, in einer Menge von 0,5 bis 1,5 Gewichtsteilen je Gewichtsteil Schlammfeststoff zusetzt und die Klärschlämme bereits vor oder während des Einmischens der Zuschlagstoffe mit organischen Flockungsmitteln in einer Menge von 1 bis 7 kg organisches Flockungsmittel/t Schlammfeststoff versetzt.

2. Verfahren nach Anspruch 1, dadurch gekennzeichnet, daß die Behandlung der Klärschlämme mit den organischen Flockungsmitteln vor dem Einmischen der Zuschlagstoffe vorgenommen wird, und zwar in der Weise, daß die Klärschlämme in einem Rührbehälter innerhalb von 1 bis 3 Minuten bei Rührerdrehzahlen von 5 bis 50 min$^{-1}$ mit der Flockungsmittellösung vermischt werden.

3. Verfahren nach Anspruch 1, dadurch gekennzeichnet, daß die Behandlung der Klärschlämme mit den organischen Flockungsmitteln vor dem Einmischen der Zuschlagstoffe vorgenommen wird, und zwar in der Weise, daß die Klärschlämme in statischen Rohrmischern, die in ihrem Innern Wendeln besitzen, in weniger als 1 Minute mit der Flockungsmittellösung in Kontakt gebracht werden.

4. Verfahren nach Anspruch 1, dadurch gekennzeichnet, daß die Behandlung der Klärschlämme mit den organischen Flockungsmitteln gleichzeitig mit dem Einmischen der Zuschlagstoffe in einem Mischer innerhalb von 1 bis 5 Minuten und bei Rührerdrehzahlen von 5 bis 50 min$^{-1}$ erfolgt.

5. Verfahren nach Anspruch 1−4, dadurch gekennzeichnet, daß als organische Flockungsmittel Mischungen eingesetzt werden, die aus einem Flockungsmittel mit 30 bis 40%iger kationischer Modifizierung und aus einem Flockungsmittel mit 70 bis 90%iger kationischer Modifizierung bestehen und deren Mischungsverhältnis 1 : 3 bis 3 : 1, bevorzugt 1 : 1, beträgt.

## Claims

1. A multistage process for dewatering sewage sludges by mixing these homogeneously with inert additives, such as finely divided coal or ash or mixtures thereof, adding organic flocculants, removing the greater part of the water, in a first dewatering step, by gravity filtration without applying a pressure differential and then effecting further dewatering in a second dewatering step, by pressure filtration on filter presses, in order to obtain filter cakes which can be combusted, with the utilization of their calorific content, wherein the additives, such as finely divided coal or ash or mixtures thereof, are added in an amount of from 0.5 to 1.5 parts by weight per part by weight of sludge solids and from 1 to 7 kg of organic flocculant/tonne of sludge solids is added to the sewage sludges before or during admixture of the additives.

2. A process as claimed in claim 1, wherein the sewage sludge is treated with the organic flocculants before admixture of the additives, namely by mixing the sewage sludge with the flocculant solution in a stirred vessel for 1 to 3 minutes at a stirrer speed of from 5 to 50 r.p.m..

3. A process as claimed in claim 1, wherein the sewage sludge is treated with the organic flocculants before admixture of the additives, namely by bringing the sewage sludge into contact with the flocculant solution in the space of less than 1 minute in static tube mixers which have internal spirals.

4. A process as claimed in claim 1, wherein the treatment of the sewage sludge with the organic flocculants is effected simultaneously with the admixture of the additives in a mixer in the course of from 1 to 5 minutes at a stirrer speed of from 5 to 50 r.p.m.

5. A process as claimed in claims 1 to 4, wherein the organic flocculants employed are mixtures of a 30—40% cationically modified flocculant and a 70—90% cationically modified flocculant in a ratio of from 1 : 3 to 3 : 1, preferably of 1 : 1.

## Revendications

· 1. Procédé à plusieurs stades pour la déshydratation de boues d'installations d'épuration des eaux, auxquelles ont été mélangés des additifs inertes tels que des cendres ou des charbons en fines particules ou un mélange de ceuxci, qui ont été répartis de manière homogène, puis ont été ajoutés des agents de floculation organiques, desquelles on a éliminé dans un premier stade de déshydratation, par une filtration par gravité sans application d'un gradient de pression, la majeure partie de l'eau et qui sont déshydratées plus complètement, dans un deuxième stade de déshydratation, par une filtration sous pression dans des filtres-presses pour la production de gâteaux de filtration pouvant être brûlés avec récupération de la chaleur, caractérisé en ce que les additifs tels que des cendres ou des charbons en fines particules ou un mélange de ceuxci sont incorporés à raison de 0,5 à 1,5 partie en poids par partie en poids de matières solides des boues et que l'on mélange aux boues de curage, avant l'addition des additifs ou pendant cette addition, des agents de floculation organiques à raison de 1 à 7 kg par tonne de matières solides des boues.

2. Procédé suivant la revendication 1, caractérisé en ce que le traitement des boues de curage avec les agents de floculation organiques est effectué avant l'addition des additifs en mélangeant la solution d'agent de floculation en l'espace de 1 à 3 minutes, dans une cuve à agitateur tournant avec 5 à 50 tours par minute, aux boues de curage.

3. Procédé suivant la revendication 1, caractérisé en ce que le traitement des boues de curage avec les agents de floculation organiques est effectué avant l'addition des additifs en mettant les boues en contact, en moins d'une minute, dans des mélangeurs tubulaires statiques, équipés de chicanes hélicoïdales, avec la solution d'agent de floculation.

4. Procédé suivant la revendication 1, caractérisé en ce que le traitement des boues de curage avec les agents de floculation organiques est réalisé simultanément avec l'addition des additifs, en l'espace de 1 à 5 mn, dans un mélangeur à agitateur tournant avec 5 à 50 tours par minute.

5. Procédé suivant l'une des revendications 1 à 4, caractérisé en ce que l'agent de floculation organique est constitué d'un mélange formé d'un floculant avec 30 à 40% de modification cationique et d'un floculant avec 70 à 90% de modification cationique avec un rapport de mélange de 1 : 3 à 3 : 1 et de préférence de 1 : 1.

12